# EUROPEAN PATENT APPLICATION

(11) **EP 3 200 447 A1**
(43) Date of publication of application: **02.08.2017**
(21) Application number: 15843238.5
(22) Date of filing: 29.07.2015
(51) Int. Cl.: H04N 5/44

(54) **MOBILE SATELLITE TELEVISION RECEPTION SYSTEM AND RECEPTION METHOD**

(30) Priority: 24.09.2014 CN 201410493444
(71) Applicant: Zhejiang Rongbei Science and Technology Co., Ltd, Economic and Technological Development Zone Hangzhou Zhejiang 310023 (CN)
(72) Inventor: HUANG, Zhijie, Hangzhou, Zhejiang 310023 (CN); MIN, Jianchun, Hangzhou, Zhejiang 310023 (CN); WANG, Yuebin, Hangzhou, Zhejiang 310023 (CN); SHEN, Bin, Hangzhou, Zhejiang 310023 (CN)
(74) Representative: Leffers, Thomas
(86) International application number: PCT/CN2015/085378
(87) International publication number: WO 2016/045447

(57) **Abstract**

Disclosed are a mobile satellite television reception system and reception method. With a current method of reception, a television program is only possible to be viewed on the screen of a receiver. In the present invention, a mobile satellite television receiver is connected to a micro-strip antenna via a coaxial cable, connected to a display screen via audio and video cables, and connected to respective intelligent terminals via WIFI. In the present invention, a program received by the micro-strip antenna is buffered in the memory module of the mobile satellite television receiver, and the program stream is wirelessly transmitted by a WIFI module to various kinds of terminals having a wireless reception function, or concurrently the audio and video signals are outputted for connecting to various kinds of display screens in a means of transportation after being decoded by a decoding module in the receiver. The present invention overcomes a defect of a previous method of reception, and allows a user to watch different television programs on different intelligent terminals and display screens, thus enhancing user experience.

## Description

### Technical field

The invention relates to the field of mobile satellite television reception, more particularly relates to mobile satellite television reception system and reception method based on L waveband.

### Background of the invention

Currently, the mobile satellite broadcast based on L waveband is divided into audio broadcast and television broadcast. Of which, the reception method of mobile satellite television is to install the micro-strip antenna on the top of the mobile vehicle, such as the roof of an automobile, lead it into the vehicle via coaxial cable and connect it to the mobile satellite television receiver, and will be displayed on the screen of the receiver after being conducted down-conversion, demodulated and decoded by the receiver.

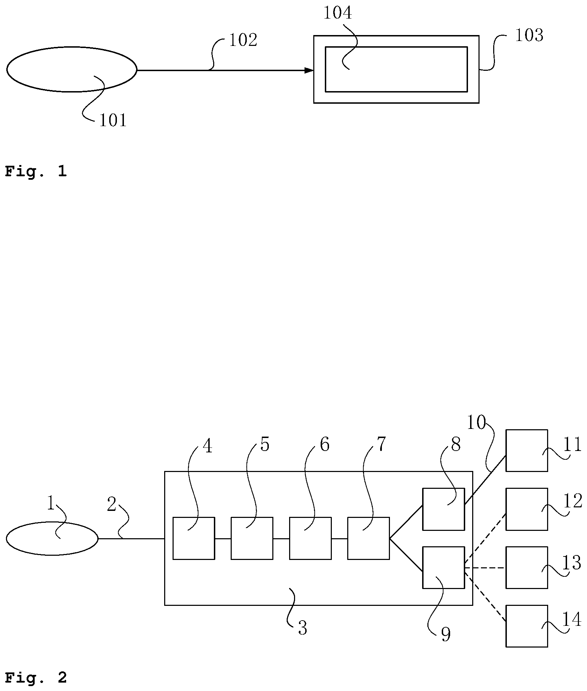

Fig. 1 is a schematic diagram of the traditional mobile satellite television reception system based on L waveband. The micro-strip antenna 101 is installed on the top of the mobile vehicle, such as the roof of automobile (the following description will take the automobile as an example), mainly to achieve the collection and amplification of the L waveband satellite signals, and then the signals are transferred to the mobile satellite television receiver 103 via the coaxial cable 102. The L waveband signals received from the micro-strip antenna will be down-conversion, demodulated and decoded by the mobile satellite television receiver, and then played on the screen 104 of the receiver. Thus, the user can watch the mobile satellite television via the mobile satellite television receiver when the automobile is moving.

To sum up, currently, the mobile satellite television reception method based on L waveband has the following limitations: firstly, the user can only watch television programs on the in-built screen of the receiver; secondly, multiple users can only watch the same program on the in-built screen of the receiver.

### SUMMARY OF THE INVENTION

In order to solve the limitations of the previous technology, a mobile satellite television reception system and reception method based on L waveband is provided in the present invention.

For this invention, all the programs are received by tuning, demodulation and demultiplexing modules, and buffered in the memory of the mobile satellite television receiver, program streams are then transmitted to various intelligent terminals with wireless reception function via a WIFI module through the wireless transmission , different mobile satellite television programs are allowed to display on a certain number of intelligent terminals with wireless reception function at any position of the mobile vehicle, or audio and video signals are outputted and connected to various display screens in mobile vehicle after being decoded by the decoding module simultaneously.

The mobile satellite television reception system of the invention comprising a micro-strip antenna, a mobile satellite television receiver and multiple intelligent terminals with wireless reception function. The mobile satellite television receiver is connected to the micro-strip antenna via a coaxial cable and connected to each intelligent terminal via WIFI.

The mobile satellite television receiver includes satellite signal tuning module, satellite signal demodulation module, de-multiplexing module, memory module and WIFI module.

The satellite signal tuning module is used to transform the L waveband signals from the micro-strip antenna into the zero intermediate frequency signals, in order that the signals can be demodulated by the satellite signal tuning module. Realize the down-conversion, amplification and filtering of the signals through the satellite signal tuning module.

The satellite signal demodulation module is used to conduct analogue-to-digital conversion, channel demodulation and channel decoding for the zero intermediate frequency signals of the further satellite signal tuning module, in order to recover the transport streams with video, audio and data from transmission signals.

The de-multiplexing module is used to extract the video, audio and data streams of corresponding programs from the transport streams, and send them into the memory module for buffering. Meanwhile, the de-multiplexing module also has the function of descrambling the encrypted video and audio streams.

The memory module is used to buffer all the video and audio streams parsed from the de-multiplexing module by the way of barrel shift, in order that the video and audio streams of the required programs can be obtained by the WIFI module.

The WIFI module is used to exchange the information and transmit the audio and video streams between the intelligent terminal and the mobile satellite television receiver. The WIFI module has AP (Access Point) function. Various television programs can be watched through an intelligent terminal via it is connected to the mobile satellite television receiver through WIFI;

The mobile satellite signals received by the micro-strip antenna are entered into the mobile satellite television receiver via coaxial cable. And all programs received by the satellite signal tuning module, satellite signal demodulation module, de-multiplexing module of the receiver are buffered in the memory module simultaneously. After that, the program streams obtained from the memory module will be dispatched by the WIFI module through wireless transmission.

This system also includes a display screen, which has audio and video input interface, and is connected to the mobile satellite television receiver via audio and video cable. Correspondingly, the mobile satellite television receiver includes a decoding module, which is used to decode and play the video and audio of the selected programs. The decoding module acquires the video and audio stream of the selected program from the memory module, and decodes them respectively, the video and audio will be synchronized according to the timestamp information carried by the streams, further realize the playing of video and audio. The WIFI module dispatches the program streams obtained from the memory module to the intelligent terminals via wireless transmission mode, at the same time, the decoding module will decode the audio and video of the programs obtained from the memory module then transmit them to the display screen via the audio and video output interface. The said display screen can be the television in mobile vehicle, vehicle-mounted center control screen or car headrest monitors.

The intelligent terminal has wireless reception function, after being connected to and authenticated by the mobile satellite television receiver, the mobile satellite television programs can be received and watched via B/S mode (login by browser) or C/S mode (login by client-end player). The intelligent terminal refers to a smart phone, a tablet PC or a laptop, etc.

When the mobile satellite television receiver and the intelligent terminals work in the B/S mode, the WIFI module of the mobile satellite television receiver can obtain program streams from the memory module and dispatches them via wireless transmission; after the intelligent terminal is connected to the mobile satellite television receiver and authenticated successfully, television programs can be controlled and watched by inputting any address in the browser.

When the mobile satellite television receiver and the intelligent terminals work in the C/S mode, the corresponding client-end player software should be installed in the intelligent terminals. The WIFI module of the mobile satellite television receiver obtains the program streams from the memory module and dispatches them via wireless transmission; after the intelligent terminal being connected to the mobile satellite television receiver and authenticated successfully, the television programs can be controlled and watched by opening the client-end player software.

The method of receiving signals by using this mobile satellite television reception system is as follows:
Step 1, lay the micro-strip antenna flat on the top of the mobile vehicle, and connect the mobile satellite television receiver to the micro-strip antenna via coaxial cable. If any display screen is necessarily to be connected, it will be connected to the mobile satellite television receiver via audio and video cable;
Step 2, power up the mobile satellite television receiver, initialize the WIFI module and set it in the AP mode;
Step 3, the mobile satellite television receiver receives signals, and buffer all the program streams in the memory module; the WIFI module dispatches all the program streams through wireless transmission; if there is a display screen being connected, all the program steams will be outputted to the vehicle display screen via the audio and video interface after being decoded by the decoding module;
Step 4, if the intelligent terminal works in the B/S mode, executes step 5-6; if it works in C/S mode, executes step 7-9;
Step 5, connect the intelligent terminal to the mobile satellite television receiver and conduct authentication, if it fails, quits immediately; otherwise goes to Step 6;
Step 6, open the browser in the intelligent terminal, input any address to skip to the program play interface and select a program to watch;
Step 7, confirm whether the client-end player software has been installed in the intelligent terminal, if installed, goes to Step 8, otherwise goes to Step 8 after downloading and installing;
Step 8, connect the intelligent terminal to the mobile satellite television receiver and conduct authentication, if it fails, quits directly; otherwise goes to Step 9;
Step 9, open the client-end player software in the intelligent terminal, and select a program to watch;
Step 10, if want to stop watching, quit the player or the browser.

The intelligent terminal is moveable and the channels can be changed at will during the watching. Multiple intelligent terminals can be connected and different programs can be watched simultaneously.

For this invention, all the programs received are buffered in the memory module of the mobile satellite television receiver, and the program steams is wirelessly transmitted by a WIFI module to various kinds of intelligent terminals having wireless reception function, or concurrently the audio and video signals are outputted for connecting to various kinds of display screens of the vehicle in a means of transportation after being decoded by a decoding module of the receiver The invention allows different television programs to be received and watched simultaneously by various intelligent terminals having wireless reception function and display screens with audio and video input interface at any position in the mobile vehicle.

This kind of reception method overcomes the two major limitations of the previous reception method, and allows users to watch different programs on different intelligent terminals and display screens, and thus improving the user experience.

### DESCRIPTION OF THE DRAWINGS

Fig. 1 is a schematic diagram of the traditional mobile satellite television reception system based on L waveband;
Fig. 2 is a schematic diagram of the mobile satellite television reception system based on L waveband provided by the present invention;
Fig. 3 is a flow diagram of receiving and watching the mobile satellite television programs according to an embodiment of the present invention;

### DESCRIPTION OF EMBODIMENTS

The invention will be described in closer detail in the following by way of various embodiments thereof with reference to the accompanying drawing, The technical solution adopted by the invention is that: the micro-strip antenna is connected to the mobile satellite television receiver via a coaxial cable, and a WIFI module having WIFI AP function is added to the mobile satellite television receiver; the mobile satellite signals received by the micro-strip antenna is entered the mobile satellite television receiver via coaxial cables, and all the programs received by the tuning module, the demodulation module and the de-multiplexing module of the receiver are buffered in the memory module simultaneously. The WIFI module transmits the program streams obtained from the memory module via wireless transmission. The program streams obtained from the memory module will be transferred by the decoding module via audio and video output interface after audio video decoding. After various intelligent terminals being connected to the mobile satellite television receiver and authentication successfully, Mobile television programs can be received and watched through B/S mode (login by browser) or C/S mode (login by client-end player) .

The schematic diagram of the mobile satellite television reception system provided by the present invention is illustrated in Fig.2. This system includes micro-strip antenna 1, mobile satellite television receiver 3, display screen 11 with audio and video input interface, and several intelligent terminals with wireless reception function. Among which, the mobile satellite television receiver 3 is connected to the micro-strip antenna 1 via coaxial cable 2. The mobile satellite television receiver 3 is connected to the display screen 11 via audio and video cable 10. Mobile satellite television receiver 3 is connected to various kinds of intelligent terminals via WIFI.

The mobile satellite television receiver 3 consists of mobile satellite signal tuning module 4, satellite signal demodulation module 5, de-multiplexing module 6, memory module 7, decoding module 8 and WIFI module 9 and so on. The mobile satellite signals received from the micro-strip antenna 1 enter the mobile satellite television receiver 3 via coaxial cable 2. All programs received by the mobile satellite signal tuning module 4, satellite signal demodulation module 5 and de-multiplexing module 6 in the receiver are buffered in the memory module 7 simultaneously. Decoding module 8 transmits the program streams obtained from the memory module 7 via audio and video output interface after decoding the audio and video. Mobile satellite television programs can be watched on the display devices having audio and video input interface after they being connected to the mobile satellite television receiver 3 via audio and video cable 10. Display devices can be a vehicle display screen 11 and so on.

WIFI module 9 with AP (Access Point) function transmits the program streams obtained from the memory module 7 via wireless transmission. Mobile satellite television programs can be received and watched by various intelligent terminals having wireless reception function via B/S mode (login by browser) or C/S mode (login by client-end player) after being connected to a mobile satellite television receiver 3 and authenticated successfully. Intelligent terminals can be a smart phone 12, a tablet PC 13 or a laptop 14, etc.

When the mobile satellite television receiver 3 and the intelligent terminal work in the B/S mode, the WIFI module 9 of the mobile satellite television receiver 3 obtains the program streams from the memory module 7 and transmits them via wireless transmission; after the intelligent terminal is connected to the mobile satellite television receiver 3 and authenticated successfully, television programs can be controlled and watched by inputting any address in the browser. When the mobile satellite television receiver 3 and the intelligent terminal work in the C/S mode, the client-end player software is requested to be installed in the intelligent terminal. The WIFI module 9 of the mobile satellite television receiver 3 obtains the program streams from the memory module 7 and transmits them via wireless transmission; after the intelligent terminal being connected to the mobile satellite television receiver 3 and authenticated successfully, the television programs can be controlled and watched by opening the client-end player.

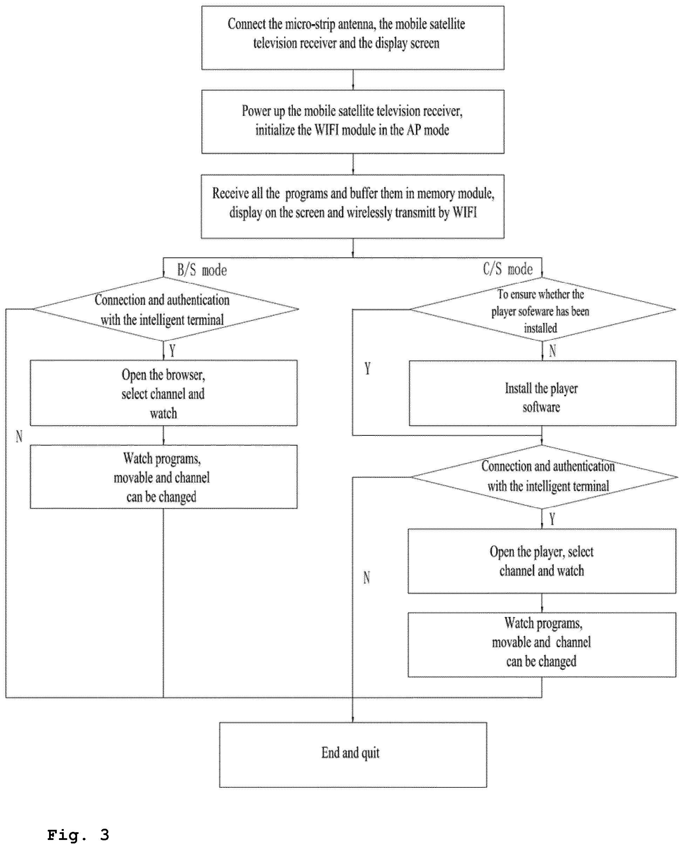

Fig. 3 illustrates the flow diagram of receiving and watching mobile satellite television programs according to an embodiment of the present invention, and includes the following steps:
Step 1, place the micro-strip antenna flat on the roof of the vehicle, and connect the mobile satellite television receiver to the micro-strip antenna via the coaxial cable. If any vehicle display screen is necessarily to be connected, the mobile satellite television receiver will be connected to the vehicle display screen via audio and video cable;
Step 2, power up the mobile satellite television receiver, initialize the WIFI module and set it in the AP mode;
Step 3, the mobile satellite television receiver receives signals and buffer all the program streams in the memory module; the decoding module decoded the program streams and then output to the vehicle display screen via audio and video interface; the WIFI module transmits all the program streams through wireless transmission.
Step 4, if the intelligent terminal works in the B/S mode, executes step 5-6; if it works in the C/S mode, executes step 7-9;
Step 5, connect the intelligent terminal to the mobile satellite television receiver and conduct authentication, if it fails, quits directly; otherwise goes to Step 6;
Step 6, open the browser in the intelligent terminal, input any address to jump to program play interface, and select a program to watch;
Step 7, confirm whether the client-end player software has been installed in the intelligent terminal, if installed, goes to Step 8, otherwise goes to Step 8 after downloading and installing;
Step 8, connect the intelligent terminal to the mobile satellite television receiver and conduct authentication, if it fails, quits directly; otherwise goes to Step 9;
Step 9, open the client-end player software in the intelligent terminal and select a program;
Step 10, if want to stop watching, quit the player or the browser.

Another way to implement the present invention is the system without display screen, and the corresponding mobile satellite television receiver without decoding module. This system simply transmits the program streams obtained from the memory module to the intelligent terminals via the WIFI module through wireless transmission.

The above mentioned specific embodiments only further illustrate the invention's objectives and technical solution It should be noted that the description of specific embodiments above shall not limit the invention. Thus, it is intended that the present invention cover the modifications and variations of this invention provided they come within the scope of the appended claims and their equivalents.

## Claims

1. A mobile satellite television reception system comprising
a micro-strip antenna, a mobile satellite television receiver and multiple intelligent terminals with wireless reception function; wherein the mobile satellite television receiver is connected to the micro-strip antenna via a coaxial cable, and is connected to each intelligent terminal via WIFI;
the intelligent terminal has WIFI reception function, after it is connected to the mobile satellite television receiver and authenticated successfully, mobile satellite television programs can be received and watched via B/S mode or C/S mode;
the mobile satellite television receiver includes satellite signal tuning module, satellite signal demodulation module, de-multiplexing module, memory module and WIFI module;
the satellite signal tuning module is used to transform the L waveband signal into the zero intermediate frequency signal, in order that the signals can be demodulated by the satellite signal tuning module, realize the down-conversion, amplification and filtering of the signal through the satellite signal tuning module;
the satellite signal demodulation module is used to conduct analogue-to-digital conversion, channel demodulation and channel decoding for the zero intermediate frequency signals of the further satellite signal tuning module, in order to recover the transport stream with video, audio and data from transmission signals;
the de-multiplexing module is used to extract the video, audio and data streams of corresponding programs from the transport streams, and send them into the memory module for buffering, meanwhile, the de-multiplexing module also has the function of descrambling the encrypted video and audio streams;
the memory module is used to buffer all the audio and video streams parsed from the de-multiplexing module by the way of barrel shift, in order that the audio and video streams of the required programs can be obtained by the WIFI module;
the WIFI module is used to exchange the information between the intelligent terminal and mobile satellite television receiver, and transmit the video and audio streams, the WIFI module has AP function, various television programs can be watched via an intelligent terminal through connecting WIFI to the mobile satellite television receiver;
the mobile satellite signals received by the micro-strip antenna are entered into the mobile satellite television receiver via coaxial cable, and all the programs received by the satellite signal tuning module, satellite signal demodulation module, and de-multiplexing module in the receiver are buffered in the memory module simultaneously, the program streams obtained from the memory module are dispatched by the WIFI module via wireless transmission.

2. The mobile satellite television reception system according to claim 1, wherein also comprising a display screen, which has audio and video input interface and is connected to the mobile satellite television receiver via audio and video cable, the mobile satellite television receiver also includes a decoding module, which is used to decode and play the video and audio of the selected programs, the decoding module acquires the video streams and audio streams of the selected program from the memory module, and decodes them respectively, then synchronizes the video and audio according to the timestamp information carried by the streams, realize the playing of the video and audio;
the WIFI module dispatches the program streams obtained from the memory module to the intelligent terminal via the wireless transmission, concurrently the decoding module transmits the decoded audio and video of the programs obtained from the memory module to the display screen via the audio and video output interface.

3. The mobile satellite television reception system according to claims 1 or 2, wherein the intelligent terminal is a smart phone, a tablet PC or a laptop.

4. The mobile satellite television reception system according to claim 2, wherein the display screen is a television in a mobile vehicle, an automobile-mounted centre control screen or a headrest screen.

5. The mobile satellite television reception system according to claim 1 or 2, wherein when the mobile satellite television receiver and the intelligent terminal work in the B/S mode, the WIFI module of the mobile satellite television receiver obtains the program streams from the memory module and dispatches them via wireless transmission; after connecting the intelligent terminal to the mobile satellite television receiver and authentication successfully, television programs can be controlled and watched by inputting any address in the browser.

6. The mobile satellite television receiving system according to claim 1 or 2, wherein when the mobile satellite television receiver and the intelligent terminal work in the C/S mode, the corresponding client-end player software should be installed in the intelligent terminal; the WIFI module of the mobile satellite television receiver obtains the program streams from the memory module and dispatches them via wireless transmission; after the intelligent terminal being connected to the mobile satellite television receiver and authenticated successfully, television programs can be controlled and watched by opening the client-end player software.

7. The method of mobile satellite television signal reception adopting the reception system according to claim 1, wherein the method is illustrated in the following steps:
Step 1, place the micro-strip antenna flat on the top of the mobile vehicle, and connect the mobile satellite television receiver to the micro-strip antenna via a coaxial cable;
Step 2, power up the mobile satellite television receiver and initialize the WIFI module in the AP mode;
Step 3, the mobile satellite television receiver receives signals, and buffer all the program streams in the memory module; and dispatch all the program streams via the WIFI module through wireless transmission;
Step 4, if the intelligent terminal works in the B/S mode, executes step 5-6; if it works in the C/S mode, execute step 7-9;
Step 5, connect the intelligent terminal with the mobile satellite television receiver and conduct authentication, if it fails, quits immediately; otherwise goes to step 6;
Step 6, open the browser in the intelligent terminal, input any address to jump to the program play interface and select a program;
Step 7, confirm whether the client-end player software has been installed in the intelligent terminal, if installed, goes to step 8, otherwise goes to step 8 after downloading and installing;
Step 8, connect the intelligent terminal to the mobile satellite television receiver and conduct authentication, if it fails, quits immediately; otherwise goes to Step 9;
Step 9, open the client-end player software of the intelligent terminal and select a program;
Step 10, if want to stop watching, quit the player or the browser.

8. The method of mobile satellite television signal reception according to claim 7, wherein if the system is connected with a display screen, the mobile satellite television receiver should also connect to the display screen via the audio and video cable in step 1; in step 3, all the program steams are dispatched by the WIFI module via wireless transmission, concurrently will be displayed on the display screen via audio and video interface after being decoded by the decoding module.
